(19) Europäisches Patentamt
European Patent Office
Office européen des brevets

(11) **EP 4 653 243 A1**

(12) **EUROPEAN PATENT APPLICATION**
published in accordance with Art. 153(4) EPC

(43) Date of publication:
26.11.2025 Bulletin 2025/48

(21) Application number: 23917794.2

(22) Date of filing: 28.12.2023

(51) International Patent Classification (IPC):
**B60L 15/20** (2006.01)      **B60K 6/442** (2007.10)
**B60T 8/175** (2006.01)      **B60W 10/02** (2006.01)

(52) Cooperative Patent Classification (CPC):
**B60K 6/442; B60L 15/20; B60T 8/175;**
**B60W 10/02;** Y02T 10/72

(86) International application number:
**PCT/JP2023/047303**

(87) International publication number:
**WO 2024/154584 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.01.2023 JP 2023004551**

(71) Applicant: **Mitsubishi Jidosha Kogyo Kabushiki Kaisha**
**Tokyo 108-8410 (JP)**

(72) Inventors:
• **HACHISUKA, Ryo**
**Tokyo 108-8410 (JP)**
• **ABE, Hiroo**
**Tokyo 108-8410 (JP)**
• **MATSUO, Shunsuke**
**Tokyo 108-8410 (JP)**

(74) Representative: **Vossius & Partner**
**Patentanwälte Rechtsanwälte mbB**
**Siebertstrasse 3**
**81675 München (DE)**

(54) **TRAVEL CONTROL DEVICE FOR VEHICLE**

(57)    A travel control device for a vehicle configured to control a torque applied to each of wheels by a feedback control such that front, rear, left, and right wheels rotate based on a target slip ratio St, the travel control device including a torque control unit 60 that calculates a second correction torque ΔT2 that tends to increase as a deviation ΔGw between a required acceleration Gwd for the wheels and an actual acceleration Gw of the wheels 3 increases, and corrects the torque applied to each of the wheels by subtracting the second correction torque (torque reduction quantity) ΔT2 from an output value of the feedback control (first correction torque ΔT1).

FIG. 9

## Description

### Technical Field

The present invention relates to a travel control device for a vehicle.

### Background Art

Conventionally, techniques are known that performs traction control of each of wheels based on a slip ratio and a yaw rate of each of the wheels. For example, an electric vehicle is disclosed in Patent Document 1 in which a braking/driving force of an electric motor is controlled within a range in which a slip ratio of each wheel does not exceed a predetermined upper limit value such that a turning acceleration of a vehicle body corresponds to a turning acceleration according to a steering angle.

### Prior Art Document

### Patent Document

Patent Document 1: Japanese Patent Laid-Open No. 2011-254590

### Summary of the Invention

### Problems to be solved by the Invention

In recent years, traction control has been required that can allow a motion of a vehicle to follow a driving operation of a driver without delay. According to the electric vehicle disclosed in Patent Document 1, a slip ratio of each wheel is controlled not to exceed a predetermined upper limit value, but is controlled only during turning of the vehicle. Therefore, in a situation where the road surface friction coefficient is low, it may not be possible to sufficiently prevent slipping at which the rotation speed of the wheels 3 is idle or locking at which the wheels 3 do not rotate. In order to quickly prevent such slipping or locking of the wheels and allow the motion of the vehicle to properly follow the driving operation of the driver, traction control with higher accuracy and high response is required.

The present invention has been made in consideration with these problems and an object thereof is to provide a travel control device for a vehicle capable of achieving traction control with higher accuracy and high response.

### Means for Solving the Problems

In order to achieve the above object, an aspect of the present invention is directed to a travel control device for a vehicle including an electric motor for traveling and configured to control a torque applied to each of wheels by a feedback control such that front, rear, left, and right wheels rotate based on a target slip ratio, the travel control device including a torque control unit that calculates a torque reduction quantity that tends to increase as a deviation between a required acceleration for the wheels and an actual acceleration of the wheels increases, and corrects the torque applied to each of the wheels by subtracting the torque reduction quantity from an output value of the feedback control.

With such a configuration, it is possible to correct the output value of the feedback control based on the torque reduction quantity such that the torque applied to each of the wheels becomes smaller as the deviation between the required acceleration and the actual acceleration for each of the wheels. Thereby, even when there is an occurrence of slipping at which the rotation speed of the wheels quickly increase or locking at which the wheels do not rotate, the slipping or locking can be quickly prevented to bring the slip ratio of the wheels closer to the target slip ratio. Therefore, according to the travel control device for a vehicle, it is possible to achieve the traction control with high accuracy and high response.

Preferably, the feedback control is PID control, and the torque control unit increases an I-control amount of the PID control as the torque reduction quantity increases. With such a configuration, the I-control of the PID control can be facilitated as the torque reduction quantity increases, and thus a steady-state deviation can be prevented, and the traction control can be performed with high accuracy.

Preferably, the torque control unit reduces a contribution of correction by the torque reduction quantity toward the output value of the PID control as the I-control amount increases. With such a configuration, as the I-control is facilitated and the output value of the PID control is settled, that is, as the rotation speed of the wheels is settled, the contribution of the torque reduction quantity can be reduced, and the value of the torque applied to each of the wheels can be stabilized.

Preferably, the travel control device further includes: a wheel translational speed calculation unit that calculates a wheel translational speed in a traveling direction of each of the wheels of the vehicle based on a steering angle, a vehicle speed, a gravitational center slip angle, and vehicle specifications; and a target wheel speed calculation unit that calculates a target wheel speed of each of the wheels based on the wheel translational speed and the target slip ratio, and the torque control unit controls the torque by the feedback control such that a wheel speed approaches the target wheel speed. With such a configuration, the target wheel speed of each of the wheels can be calculated with high accuracy using the wheel translational speed with consideration given to the inner/outer wheel difference of each of the wheels, and the torque applied to each of the wheels can be controlled with high accuracy. Therefore, the traction control can be performed with high accuracy.

Preferably, the wheel translational speed calculation unit and the target wheel speed calculation unit are included in a main control unit, and the torque control unit is included in a sub-control unit separate from the main control unit. With such a configuration, the sub-control unit can calculate the control torque for each of the wheels without information on the wheel translational speed.

## Advantageous Effects of the Invention

With a travel control device for a vehicle according to the present invention, it is possible to achieve traction control with higher accuracy and high response.

## Brief Description of the Drawings

FIG. 1 is a schematic configuration diagram of a plug-in hybrid vehicle including a travel control device according to an embodiment.
FIG. 2 is a block diagram illustrating a schematic configuration of a travel control device according to the embodiment.
FIG. 3 is a block diagram illustrating a schematic configuration of a target average slip ratio calculation unit.
FIG. 4 is an explanatory diagram illustrating examples of states of time changes in an accelerator opening, a braking/driving force, and a slip ratio due to torque control in the travel control device of the embodiment.
FIG. 5 is an explanatory diagram illustrating an example of a relationship between a braking/driving force and a slip ratio for wheels.
FIG. 6 is a block diagram illustrating a schematic configuration of a target front/rear relative slip ratio calculation unit.
FIG. 7 is an explanatory diagram illustrating an example of a relationship between a yaw rate and a front/rear relative slip ratio of the vehicle.
FIG. 8 is an explanatory diagram schematically illustrating a state where the vehicle is turning.
FIG. 9 is an explanatory diagram illustrating a schematic configuration of motor control units and brake control units.

## Mode for Carrying out the Invention

An embodiment of the present invention will be described below with reference to the drawings.

(Vehicle)

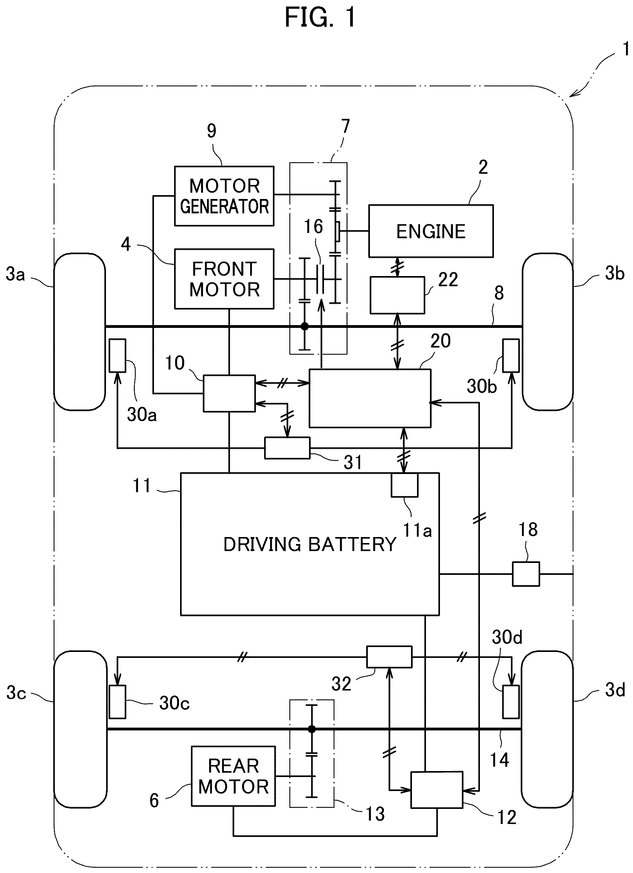

FIG. 1 is a schematic configuration diagram of a plug-in hybrid vehicle (hereinafter referred to as vehicle 1) including a travel control device according to an embodiment. The vehicle 1 is a four-wheel drive vehicle which can travel by driving front wheels 3a and 3b with the output of an engine 2 and includes an electric front motor 4 (electric motor for driving) that drives the front wheels 3a and 3b, and an electric rear motor 6 (electric motor for driving) that drives rear wheels 3c and 3d. In the following description, unless otherwise particularly distinguished, the front wheels 3a and 3b and the rear wheels 3c and 3d will be referred to "wheels 3".

(Engine)

The engine 2 can drive a driving shaft 8 of the front wheels 3a and 3b via a front transaxle 7, and can also drive a motor generator 9 via the front transaxle 7 to generate electricity. Further, the engine 2 and the front wheels 3a and 3b are coupled to each other via a clutch 16 disposed in the front transaxle 7. Further, the vehicle 1 includes a fuel tank (not illustrated) that stores fuel to supply the fuel to the engine 2.

(Motor)

The front motor 4 is driven by electric power with a high voltage supplied from a driving battery 11 and the motor generator 9 mounted on the vehicle 1 via a front motor control unit (a sub-control unit) 10, and drives the driving shaft 8 of the front wheels 3a and 3b via the front transaxle 7. The rear motor 6 is driven by electric power with a high voltage from the driving battery 11 via a rear motor control unit (a sub-control unit) 12, and drives a driving shaft 14 of the rear wheels 3c and 3d via a rear transaxle 13. The electric power generated by the motor generator 9 can charge the driving battery 11 via the front motor control unit 10, and can also supply the electric power to the front motor 4 and the rear motor 6.

(Driving battery)

The driving battery 11 is configured by a secondary battery such as a lithium ion battery, and includes a battery module (not illustrated) configured by assembling a plurality of battery cells. Further, the driving battery 11 includes a state-of-charge detection unit 11a that detects a state of charge (SOC) of the driving battery 11. Further, the vehicle 1 includes a charger 18 that can charge the driving battery 11 from an external power source.

(Motor Control Unit)

Based on a control signal from a main control unit 20 mounted on the vehicle 1, the front motor control unit 10 controls a braking/driving force due to the front motor 4, that is, driving torque or regenerative braking torque of the front motor 4, and also controls the amount of electric power generated and the output from the motor generator 9. The rear motor control unit 12 controls a braking/driving force due to the rear motor 6, that is, driving torque or regenerative braking torque of the rear motor 6, based on a control signal from the main control unit 20.

(Engine Control Unit)

An engine control unit 22 is a control device for the engine 2, and includes an input/output device, a storage device (ROM, RAM, non-volatile RAM, etc.), a central processing unit (CPU), a timer, and the like. The engine control unit 22 controls a fuel injection quantity, a fuel injection timing, an intake quantity, and the like of the engine 2 based on a control signal (demanded output) from the main control unit 20, thereby controlling the drive of the engine 2.

(Main Control Unit)

The main control unit 20 is a control device for performing comprehensive control of the vehicle 1, and includes an input/output device, a storage device (ROM, RAM, non-volatile RAM, etc.), a central processing unit (CPU), a timer, and the like. The front motor control unit 10, the rear motor control unit 12, and the engine control unit 22 are coupled to an input side of the main control unit 20, and detection and operation information from these units is input to the main control unit 20. On the other hand, the front motor control unit 10, the rear motor control unit 12, the engine control unit 22, and the clutch 16 of the front transaxle 7 are coupled to an output side of the main control unit 20.

The main control unit 20 calculates a vehicle-required output necessary to drive the vehicle 1 for traveling based on various detection quantities such as accelerator operation information degrees of the vehicle 1 and various operation information, and transmits control signals to the engine control unit 22, the front motor control unit 10, and the rear motor control unit 12. The main control unit 20 controls switching of travel modes (EV mode, series mode, and parallel mode), the output of the engine 2, the front motor 4, and the rear motor 6, the generated electric power and output of the motor generator 9, and engagement and disengagement of the clutch 16 of the front transaxle 7.

In the EV mode, the engine 2 is stopped, and the front motor 4 and the rear motor 6 are driven with electric power supplied from the driving battery 11 to cause the vehicle to travel. In the series mode, the clutch 16 of the front transaxle 7 is disengaged, and the motor generator 9 is actuated by the engine 2. Then, the front motor 4 and the rear motor 6 are driven with the electric power generated by the motor generator 9 and the electric power supplied from the driving battery 11 to cause the vehicle to travel. In the series mode, a rotation speed of the engine 2 is set to an efficient value, and electric power generated by a surplus output is supplied to the driving battery 11 to charge the driving battery 11. In the parallel mode, the clutch 16 of the front transaxle 7 is engaged to mechanically transmit power from the engine 2 via the front transaxle 7 to drive the front wheels 3a and 3b. Further, the front motor 4 and the rear motor 6 are driven with the electric power generated by actuating the motor generator 9 by the engine 2 and the electric power supplied from the driving battery 11 to cause the vehicle to travel.

The main control unit 20 sets the travel mode to the parallel mode in a region where the efficiency of the engine 2 is high, for example, in a high-speed region. Further, in regions excluding the parallel mode, that is, in medium and low speed regions, the EV mode and the series mode are switched to each other based on the state of charge SOC (charge amount) of the driving battery 11.

(Brake Device)

Further, the wheels 3 of the vehicle 1 are provided with brake devices 30a, 30b, 30c, and 30d that apply braking torque. The front-wheel brake devices 30a and 30b are controlled by a front brake control unit (sub-control unit) 31, the rear-wheel brake devices 30c and 30d are controlled by a rear brake control unit(sub-control unit) 32, and the braking torque for each wheel 3 can be controlled independently.

(Brake Control Unit)

The front brake control unit 31 and the rear brake control unit 32 are connected to the main control unit 20 in a mutually communicable manner. The front brake control unit 31 may be connected to the main control unit 20 via the front motor control unit 10 so as to be communicable with each other, and the rear brake control unit 32 may be connected to the main control unit 20 via the rear motor control unit 12 in a mutually communicable manner. The front brake control unit 31 and the rear brake control unit 32 control the actuation of each of the brake devices 30a, 30b, 30c, and 30d based on a brake pedal operation signal from a brake pedal sensor (not illustrated).
Each of the front motor control unit 10, the rear motor control unit 12, the front brake control unit 31, and the rear brake control unit 32 includes an input/output device, a storage device (ROM, RAM, non-volatile RAM, etc.), a central processing unit (CPU), a timer, and the like. These control units have a faster processing speed than the main control unit 20.

(Travel Control Device)

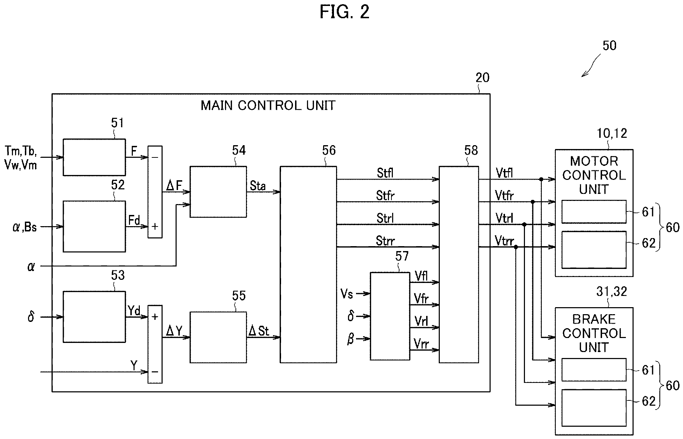

FIG. 2 is a block diagram illustrating a schematic configuration of a travel control device 50 according to the embodiment. The travel control device 50 includes the main control unit 20, the motor control units (the front motor control unit 10 and the rear motor control unit 12), and the brake control units (the front brake control unit 31 and the rear brake control unit 32). Although FIG. 2 illustrates one motor control unit and one brake control unit, the vehicle 1 of the present embodiment includes a pair of motor control units and a pair of brake control units for the front wheels 3a and 3b and the rear wheels 3c and 3d.
First, the configuration of the main control unit 20 will be described in detail. As illustrated in FIG. 2, the main control unit 20 includes an actual braking/driving force calculation unit 51, a required braking/driving force calculation unit 52, a required yaw rate calculation unit 53, a target average slip ratio calculation unit 54, a target front/rear relative slip ratio calculation unit 55, a target slip ratio calculation unit 56, a wheel translational speed calculation unit 57, and a target wheel speed calculation unit 58.

(Braking/Driving Force Calculation Unit)

The actual braking/driving force calculation unit 51 receives, as inputs, a current motor torque Tm of each of the front motor 4 and the rear motor 6, a brake torque Tb of each of the brake devices 30a, 30b, 30c, and 30d, an actual wheel speed Vw of each of the wheels 3, and an actual motor rotation speed Vm of each of the front motor 4 and the rear motor 6. The motor torque Tm and the brake torque Tb are command values calculated by the motor control unit and the brake control unit. The actual wheel speed Vw and the actual motor rotation speed Vm are detected by sensors (not illustrated) and are input to the main control unit 20. The actual braking/driving force calculation unit 51 calculates, based on the input values, an actual braking/driving force F, which is an estimated value of the current total braking/driving force of the entire vehicle 1. Further, the required braking/driving force calculation unit 52 receives, as inputs, an accelerator opening α and a brake stroke Bs of the vehicle 1, and calculates a required braking/driving force Fd, which is a total braking/driving force required for the entire vehicle 1 by a driver.

(Required Yaw Rate Calculation Unit)

The required yaw rate calculation unit 53 receives, as an input, a detected value of a steering angle (handle angle) δ, and calculates a required yaw rate Yd, which is a speed in a turning direction required for the vehicle 1 by the driver. The steering angle δ is detected by a sensor (not illustrated) and input to the main control unit 20.

(Target Average Slip Ratio Calculation Unit)

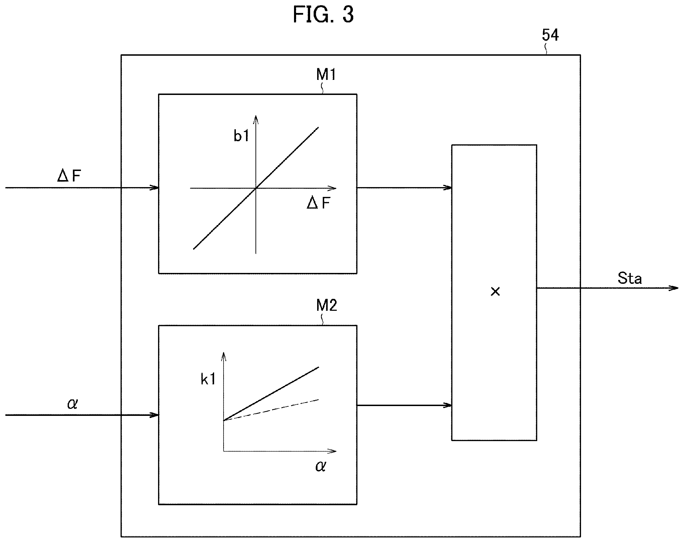

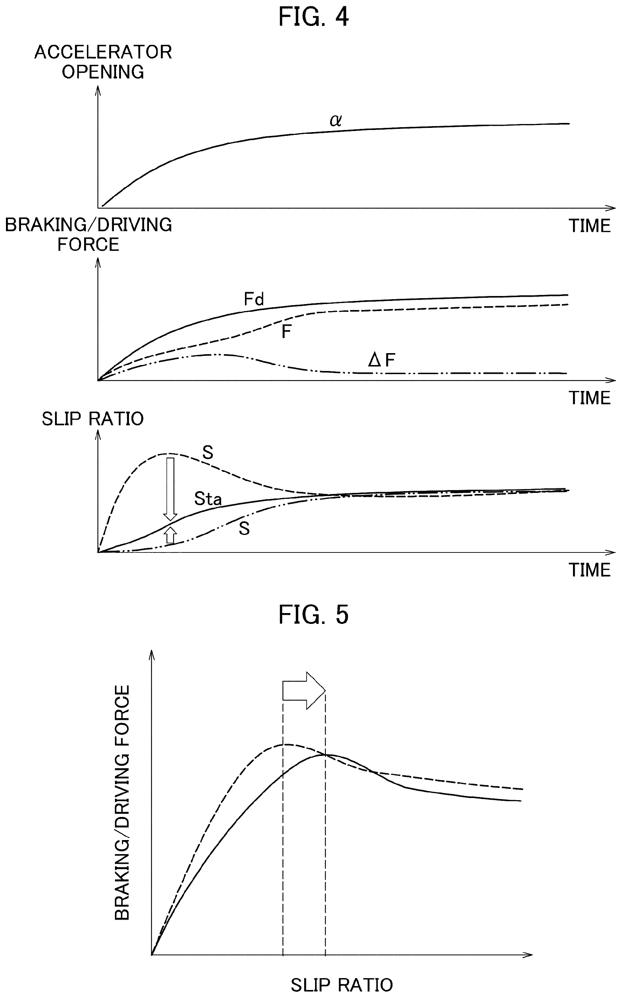

FIG. 3 is a block diagram illustrating a schematic configuration of the target average slip ratio calculation unit 54. The target average slip ratio calculation unit 54 receives, as an input, a braking/driving force deviation ΔF, which is a deviation between the actual braking/driving force F calculated by the actual braking/driving force calculation unit 51 and the required braking/driving force Fd calculated by the required braking/driving force calculation unit 52. Further, the target average slip ratio calculation unit 54 receives, as an input, the accelerator opening $\alpha$. The target average slip ratio calculation unit 54 calculates, based on the input braking/driving force deviation $\Delta F$ and accelerator opening $\alpha$, a target average slip ratio Sta for each of the wheels 3. The target average slip ratio Sta is a target value of an average slip ratio Sa (see FIG. 4) of all the wheels 3. In other words, the target average slip ratio Sta is an average value of target slip ratios St (see "Stfl", "Stfr", "Strl", and "Strr" in FIG. 2), which are target values of the slip ratios S (see FIG. 4) for the respective wheels 3.

Specifically, the target average slip ratio calculation unit 54 uses a map M1 in which the relationship between the braking/driving force deviation $\Delta F$ and a first base value (base value) b1 of the target average slip ratio Sta is predefined, and sets the first base value b1 according to the input braking/driving force deviation $\Delta F$. The map M1 is defined such that the first base value b1 changes in proportion to the braking/driving force deviation $\Delta F$. In addition, the target average slip ratio calculation unit 54 uses a map M2 in which the relationship between the accelerator opening $\alpha$ and a first correction coefficient (correction coefficient) k1 is predefined, and sets the first correction coefficient k1 according to the input accelerator opening $\alpha$. The map M2 is defined such that the first correction coefficient k1 increases as the accelerator opening $\alpha$ increases, as indicated by a solid line in the drawing, for example. Then, the target average slip ratio calculation unit 54 multiplies the set first base value b1 by the first correction coefficient k1 to calculate the target average slip ratio Sta. The target average slip ratio calculation unit 54 outputs the calculated target average slip ratio Sta to the slip ratio calculation unit 56.

The target average slip ratio Sta set as described above is used in a process to be described below such that the average slip ratio Sa of the respective wheels 3 approaches the target average slip ratio Sta. FIG. 4 is an explanatory diagram illustrating examples of states of time changes in the accelerator opening, the braking/driving force, and the slip ratio due to torque control in the travel control device 50 of the embodiment. As described above, the target average slip ratio Sta is calculated so as to be proportional to the braking/driving force deviation $\Delta F$ and to increase as the accelerator opening $\alpha$ increases. As a result, the target average slip ratio Sta can be set to a value corresponding to the braking/driving force deviation $\Delta F$, and a value suitable for the accelerator opening $\alpha$, that is, the required braking/driving force Fd. In other words, the accelerator opening $\alpha$ is reflected on the target average slip ratio Sta, and thus it is possible to compensate for the required braking/driving force Fd with respect to the target average slip ratio Sta.

In addition, the first correction coefficient k1 may be determined based on a relationship (that is, $\mu$-S characteristic; for example, see FIG. 5) between the braking/driving force (braking/driving force friction coefficient) on the wheels (tires) and the slip ratio. Within a range where the $\mu$-S characteristic has a negative gradient, upper limits of the first correction coefficient k1 and the first base value b1 may be set. Thus, as the driver steps on the accelerator, as indicated by white arrows in FIG. 4, a slip ratio S of the slip wheel with no friction margin (see a dashed line) and a slip ratio S of the grip wheel with a friction margin (see a two-dot chain line) can both be controlled to converge to a target average slip ratio Sta for which the required braking/driving force Fd is compensated.

FIG. 5 is an explanatory diagram illustrating an example of a relationship between the braking/driving force for the wheel and the slip ratio. As indicated by a solid line or a dashed line in the drawing, the relationship (that is, the $\mu$-S characteristic) between the braking/driving force (braking/driving force friction coefficient) for the wheel (tire) and the slip ratio changes depending on road surface conditions and wear.

In the present embodiment, as described above, the target average slip ratio Sta is calculated by reflecting the magnitude of the accelerator opening $\alpha$. Therefore, even when the $\mu$-S characteristic for the wheels 3 changes, the target average slip ratio Sta can be set to the slip ratio for which the braking/driving force is maximum according to an accelerator operation from the driver, as indicated by a white arrow in the drawing.

Here, the first correction coefficient k1 may include a plurality of patterns that can be changed according to a request from the driver. For example, as indicated by a dashed line in the map M2 in FIG. 3, a pattern is prepared in which the amount of increase in the first correction coefficient k1 relative to the amount of increase in the accelerator opening $\alpha$ is larger than that indicated by the solid line. In addition, the driver can select which pattern of the first correction coefficient k1 to use via an interface such as a switch (not illustrated). Thereby, the driver can select the first correction coefficient k1 indicated by the solid line when he/she intends to increase the slip ratio S of the wheel 3 according to the amount of stepping on the accelerator, and select the first correction coefficient k1 indicated by the dashed line when he/she intends to decrease the slip ratio S of the wheel 3.

In other words, a degree to which the target average slip ratio Sta is corrected by the accelerator opening $\alpha$ can be changed depending on a driving operation technique of the driver, and thus it is possible to obtain vehicle characteristics that are easy for the driver to handle.

(Target Front/Rear Relative Slip Ratio Calculation Unit)

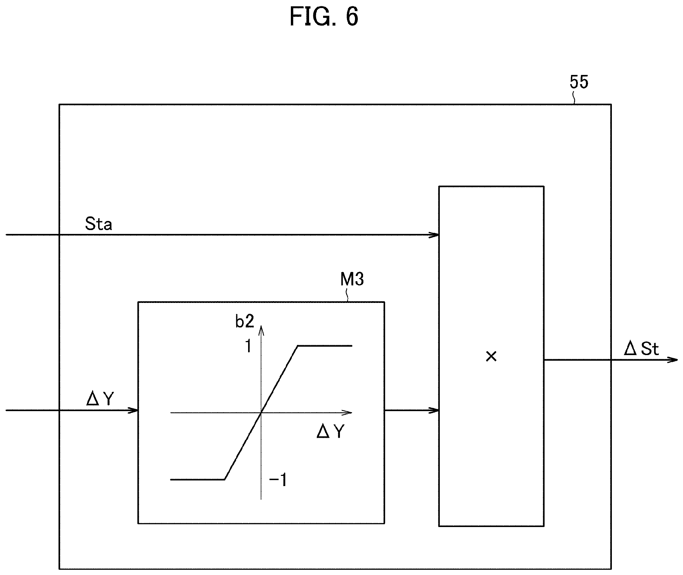

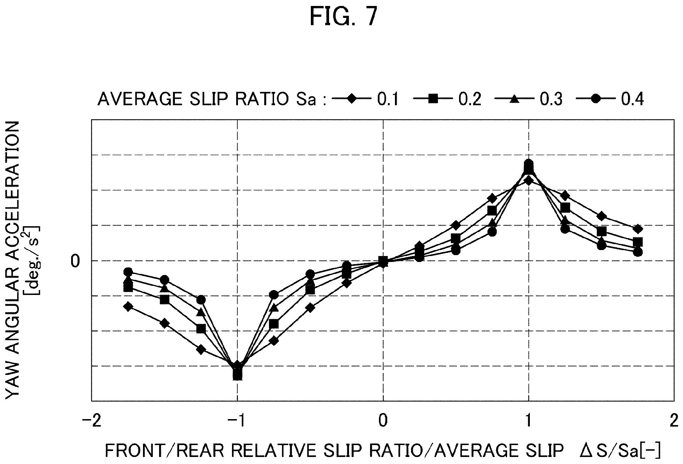

FIG. 6 is a block diagram illustrating a schematic configuration of the target front/rear relative slip ratio calculation unit 55. The target front/rear relative slip ratio calculation unit 55 calculates a target front/rear relative slip ratio $\Delta$St which is

a target value of a front/rear relative slip ratio ΔS (see FIG. 7).

The front/rear relative slip ratio ΔS in the present embodiment will be described. The slip ratio of the left front wheel 3a is defined as "Sfl", the slip ratio of the right front wheel 3b is defined as "Sfr", the slip ratio of the left rear wheel 3c is defined as "Srl", and the slip ratio of the right rear wheel 3d is defined as "Srr". In this case, the front/rear relative slip ratio ΔS is expressed by Formula (1) below. In this way, the front/rear relative slip ratio ΔS is a relative value between the slip ratios of the left and right front wheels 3a and 3b and the slip ratios of the left and right rear wheels 3c and 3d. In the present embodiment, the front/rear relative slip ratio is obtained by dividing the deviation between the sum of the slip ratios of the rear wheels 3c and 3d and the sum of the slip ratios of the front wheels 3a and 3b by a value of 4. Here, the deviation is calculated by subtracting the slip ratios of the front wheels 3a and 3b from the slip ratios of the rear wheels 3c and 3d, but the deviation may be calculated by subtracting the slip ratios of the rear wheels 3c and 3d from the slip ratios of the front wheels 3a and 3b.

$$\Delta S = ((Srl + Srr) - (Sfl + Sfr))/4...(1)$$

Here, FIG. 7 is an explanatory diagram illustrating an example of a relationship between a yaw angular acceleration (a differential value of the yaw rate) and the front/rear relative slip ratio ΔS of the vehicle. In FIG. 7, a horizontal axis represents a base value "ΔS/Sa" obtained by making the front/rear relative slip ratio ΔS dimensionless by the average slip ratio Sa. The relationship illustrated in FIG. 7 is an example of an analysis result obtained by vehicle behavior analysis. As illustrated in the drawing, even when the average slip ratio Sa changes, as long as the base value is within a range of an absolute value of 1 or less, the base value and the yaw angular acceleration have a proportional relationship. The relationship illustrated in FIG. 7 is established even in a region where the μ-S characteristic of the wheels has a negative gradient. In this way, the yaw angular acceleration relative to the base value can be obtained by vehicle behavior analysis, and the yaw angular acceleration can be controlled (yaw moment control) by a change of the base value.

Therefore, the target front/rear relative slip ratio calculation unit 55 calculates the target front/rear relative slip ratio ΔSt based on the relationship between the yaw angular acceleration and the base value illustrated in FIG. 7. Specifically, the target front/rear relative slip ratio calculation unit 55 receives, as an input, the target average slip ratio Sta calculated by the target average slip ratio calculation unit 54 as illustrated in FIG. 6. Further, the target front/rear relative slip ratio calculation unit 55 receives, as an input, a yaw rate deviation ΔY, which is a deviation between the required yaw rate Yd calculated by the required yaw rate calculation unit 53 and an actual yaw rate Y. The actual yaw rate Y is a current turning speed of the vehicle 1, and is input to the main control unit 20 from a sensor (not illustrated).

Then, the target front/rear relative slip ratio calculation unit 55 uses a map M3 in which the relationship between the input yaw rate deviation ΔY and the second base value b2 is predefined, and sets the second base value b2 according to the input yaw rate deviation ΔY. The second base value b2 corresponds to a value obtained by making the target front/rear relative slip ratio ΔSt dimensionless by the target average slip ratio Sta. In the map M3, the relationship between the yaw rate deviation ΔY, and the target front/rear relative slip ratio ΔSt and the target average slip ratio Sta (that is, the second base value b2) is predefined, based on the relationship illustrated in FIG. 7. The yaw angular acceleration of the vehicle 1 relative to the second base value b2 can be obtained by vehicle behavior analysis as illustrated in FIG. 7, and the second base value b2 is defined in the map M3 such that a desired yaw angular acceleration can be obtained for each yaw rate deviation ΔY. More specifically, the map M3 is defined such that the second base value b2 becomes large as the yaw rate deviation ΔY becomes large, and the second base value b2 becomes small as the yaw rate deviation ΔY becomes small. In the map M3, Upper and lower limits of the second base value b2 are set to an absolute value of 1. The target front/rear relative slip ratio calculation unit 55 multiplies the second base value b2 set from the map M3 by the target average slip ratio Sta to calculate the target front/rear relative slip ratio ΔSt. The target front/rear relative slip ratio calculation unit 55 outputs the calculated target front/rear relative slip ratio ΔSt to the target slip ratio calculation unit 56.

As described above, the target front/rear relative slip ratio ΔSt according to the yaw rate deviation ΔY is calculated based on the relationship between the yaw angular acceleration and the front/rear relative slip ratio ΔS illustrated in FIG. 7, whereby the influence of the yaw rate deviation ΔY can be appropriately reflected on the target front/rear relative slip ratio ΔSt. Furthermore, the influence of the yaw rate deviation ΔY can be appropriately reflected on the slip ratio St of each of the wheels 3 to be described below. As a result, the yaw moment control can be performed with high followability with respect to the operation. Further, the characteristics of the yaw moment control can be gradually changed according to the operation from the driver, and thus the driver easily handles the vehicle 1. The target front/rear relative slip ratio ΔSt may be calculated using a calculation formula in which the relationship between the yaw rate deviation ΔY, and the target front/rear relative slip ratio ΔSt and the target average slip ratio Sta (that is, the second base value b2) is predefined, without being limited to the map.

(Target Slip Ratio Calculation Unit)

FIG. 2 is described again. The target slip ratio calculation unit 56 receives, as inputs, the target average slip ratio Sta calculated by the target average slip ratio calculation unit 54 and the target front/rear relative slip ratio $\Delta$St calculated by the target front/rear relative slip ratio calculation unit 55. Then, the target slip ratio calculation unit 56 calculates a target slip ratio St for each of the wheels 3 according to Formulas (2) and (3) below, using the input target average slip ratio Sta and target front/rear relative slip ratio $\Delta$St. In Formula (2), "Stfl" represents the target slip ratio of the left front wheel 3a, and "Stfr" represents the target slip ratio of the right front wheel 3b. In Formula (3), "Strl" represents the target slip ratio of the left rear wheel 3c, and "Strr" represents the target slip ratio of the right rear wheel 3d. In the present embodiment as described above, the target slip ratios St of the left and right front wheels 3a and 3b are set to the same value, and the target slip ratios St of the left and right rear wheels 3c and 3d are set to the same value. Thus, when the target front/rear relative slip ratio $\Delta$St is added and subtracted to/from the target average slip ratio Sta based on the relationship in Formula (1) above, the target slip ratios St (Stfl, Stfr, Strl, and Strr) of the respective wheels 3 can be calculated. The target slip ratio calculation unit 56 outputs the calculated target slip ratios St of the respective wheels 3 to the target wheel speed calculation unit 58.

$$\texttt{Stfl = Stfr = Sta - }\Delta\texttt{St...(2)}$$

$$\texttt{Strl = Strr = Sta + }\Delta\texttt{St...(3)}$$

(Wheel translational speed Calculation Unit)

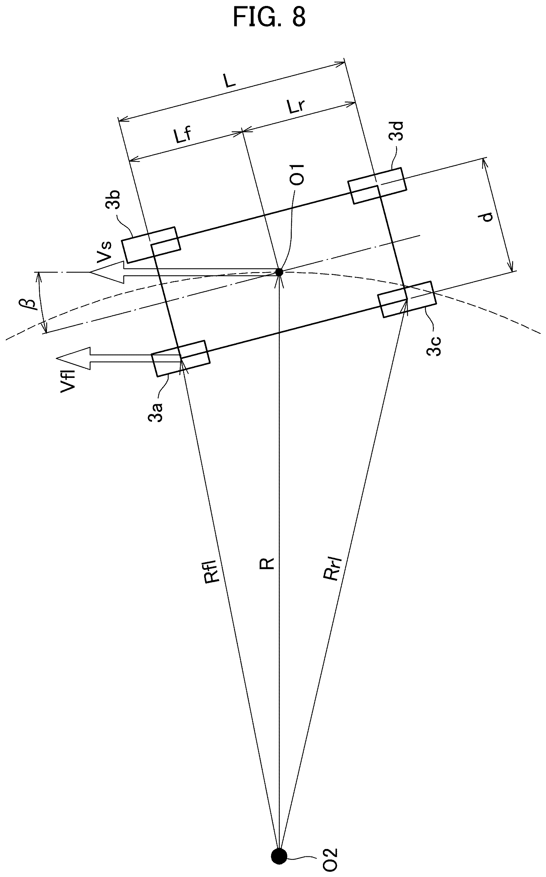

The wheel translational speed calculation unit 57 receives, as inputs, a vehicle speed Vs, a steering angle $\delta$, and a gravitational center slip angle $\beta$, and calculates a wheel translational speed V based on the input vehicle speed Vs, steering angle $\delta$, and gravitational center slip angle $\beta$, and vehicle specifications indicated in Formulas (4) to (8) below. The wheel translational speed V is a speed in a traveling direction of the respective wheels 3 of the vehicle, that is, in a translational direction of the respective wheels 3, and is calculated with consideration given to inner/outer wheel differences of the respective wheels 3. The vehicle speed Vs is input to the main control unit 20 from a sensor (not illustrated). The gravitational center slip angle $\beta$ is a slip angle at a gravitational center O1 (see FIG. 8) of the vehicle 1, and can be estimated based on the vehicle speed Vs, the acceleration at the gravitational center O1 of the vehicle 1, the steering angle $\delta$, and the vehicle specifications.

Here, FIG. 8 is an explanatory diagram schematically illustrating a state where the vehicle 1 is turning. As illustrated in the drawing, it is assumed that the vehicle 1 is turning around a turning center O2. In addition, FIG. 8 illustrates a state where the vehicle 1 is skidding. When the vehicle 1 is turning as illustrated in the drawing, a turning radius R at the gravitational center O1 of the vehicle 1 can be calculated according to Formula (4) below. "A" represents an acceleration at the gravitational center O1 of the vehicle 1, and can use a value detected by a sensor (not illustrated). Further, "L" represents a distance (wheelbase) from the driving shaft 8 between the front wheels 3a and 3b to the driving shaft 14 between the rear wheels 3c and 3d, in a front-rear direction of the vehicle.

$$\texttt{R = (1 + AV2) }\cdot\texttt{ L/}\delta\texttt{...(4)}$$

In addition, a turning radius Rfl of the front wheel 3a, a turning radius Rfr of the front wheel 3b, a turning radius Rfl of the rear wheel 3c, and a turning radius Rrr of the rear wheel 3d can be calculated according to Formulas (5) to (8) below. "Lf" represents a distance from the driving shaft 8 between front wheels 3a and 3b to the gravitational center O1 in the front-rear direction, "Lr" represents a distance from the driving shaft 14 between the rear wheels 3c and 3d to the gravitational center O1 in the front-rear direction of the vehicle, and "d" represents a distance (tread) between the wheels 3 in the left-right direction. FIG. 8 illustrates only the turning radius Rfl of the front wheel 3a and the turning radius Rrl of the rear wheel 3c.

[Formula 1]

$$Rfl = \sqrt{\left(R - Lf\sin\beta - \frac{d}{2}\cos\beta\right)^2 + \left(Lf\cos\beta - \frac{d}{2}\sin\beta\right)^2} \qquad \cdot\cdot\cdot\ (5)$$

[Formula 2]

$$Rfr = \sqrt{\left(R - Lf\sin\beta + \frac{d}{2}\cos\beta\right)^2 + \left(Lf\cos\beta + \frac{d}{2}\sin\beta\right)^2} \qquad \cdots \quad (6)$$

[Formula 3]

$$Rrl = \sqrt{\left(R + Lr\sin\beta - \frac{d}{2}\cos\beta\right)^2 + \left(Lr\cos\beta - \frac{d}{2}\sin\beta\right)^2} \qquad \cdots \quad (7)$$

[Formula 4]

$$Rrr = \sqrt{\left(R + Lr\sin\beta + \frac{d}{2}\cos\beta\right)^2 + \left(Lr\cos\beta + \frac{d}{2}\sin\beta\right)^2} \qquad \cdots \quad (8)$$

The wheel translational speed V of each of the wheels 3 can be calculated according to Formula (9) below. By replacing "x" and "y" with "f" or "r", a wheel translational speed Vfl of the left front wheel 3a, a wheel translational speed Vfr of the right front wheel 3b, a wheel translational speed Vrl of the left rear wheel 3c, and a wheel translational speed Vrr of the right rear wheel 3d are obtained. FIG. 8 illustrates only the wheel translational speed Vfl of the front wheel 3a. The wheel translational speed calculation unit 57 calculates the wheel translational speed V (Vfl, Vfr, Vrl, and Vrr, see FIG. 2) of the respective wheels 3 as described above, and outputs the wheel translational speed to the target wheel speed calculation unit 58.

$$Vxy = Rxy/R \cdot Vs...(9)$$

(Target Wheel Speed Calculation Unit)

The target wheel speed calculation unit 58 receives, as inputs, the target slip ratio St of each of the wheels 3 calculated by the target slip ratio calculation unit 56 and the wheel translational speed V of each of the wheels 3 calculated by the wheel translational speed calculation unit 57, and calculates a target wheel speed Vt of each of the wheels 3. Specifically, the target wheel speed calculation unit 58 calculates target wheel speed Vt of each of the wheels 3 from the relationship between the slip ratio and the wheel speed according to Formula (10) below. By replacing "x" and "y" in Formula (10) with "f" or "r", a target wheel speed Vtfl of the left front wheel 3a, a target wheel speed Vtfr of the right front wheel 3b, a target wheel speed Vtrl of the left rear wheel 3c, and a target wheel speed Vtrr of the right rear wheel 3d are obtained. The target wheel speed calculation unit 58 outputs the calculated target wheel speeds Vt (Vtfl, Vtfr, Vtrl, and Vtrr, see FIG. 2) of the respective wheels 3 to the motor control unit and the brake control unit.

$$Vtxy = (1 + Stxy) \cdot Vxy...(10)$$

The motor control unit and the brake control unit, to which the calculated target wheel speeds Vt are input as described above, execute feedback control to calculate a control torque for each of the wheels 3 such that the actual wheel speed Vw of each of the wheels 3 approaches the target wheel speed Vt. Thereby, the front motor 4, the rear motor 6, the brake devices 30a, 30b, 30c, and 30d, and the like are controlled such that the set control torque is applied to each of the wheels 3. In this way, traction control of each of the wheels 3 can be performed.

As described above, the travel control device 50 of the present embodiment calculates the wheel translational speed V of each of the wheels 3 in the main control unit 20, and further calculates the target wheel speed Vt. This makes it possible to accurately calculate the target wheel speed Vt using the wheel translational speed V with consideration given to inner/outer wheel differences of the respective wheels 3. Furthermore, the motor control unit and the brake control unit executes feedback control of the wheel speed. The main control unit 20 calculates both of the wheel translational speed V and the target wheel speed Vt, and the motor control unit and the brake control unit receiving, as an input, the target wheel speed Vt execute feedback control based on the wheel speed. Thus, the motor control unit and the brake control unit do not need to have information on the wheel translational speed V.

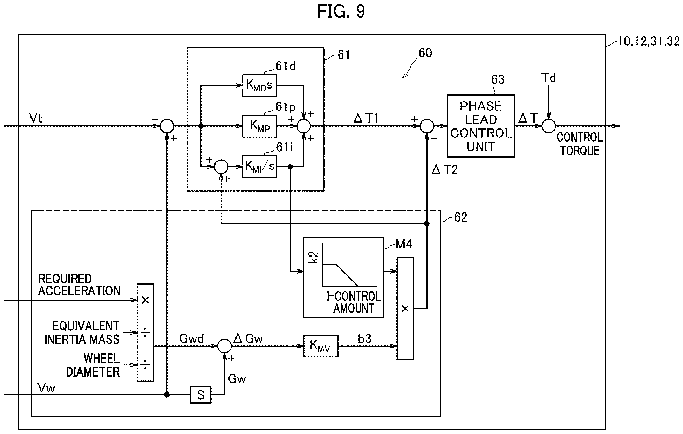

Next, the motor control units 10 and 12 and the brake control units 31 and 32 will be described. FIG. 9 is an explanatory diagram illustrating a schematic configuration of the motor control units 10 and 12 and the brake control units 31 and 32. For example, in a situation where the road surface friction coefficient is low, there is a possibility that the wheels 3 may slip due to idle, or the wheels 3 may lock without idle. In order to prevent such slipping or locking, the motor control units 10 and 12 and the brake control units 31 and 32 include a torque control unit 60 including a PID control unit 61 and an initial torque reduction control unit 62.

(PID control unit)

The PID control unit 61 executes feedback control based on the target wheel speeds Vt (Vtfl, Vtfr, Vtrl, and Vtrr) and the actual wheel speed Vw such that each of the wheels 3 rotates at the target wheel speed Vt. Specifically, the PID control unit 61 receives, as an input, the deviation between the target wheel speed Vt and the actual wheel speed Vw, calculates a proportional term for the deviation in a proportional term calculation unit 61p, calculates a derivative term for the deviation in a derivative term calculation unit 61d, and calculates an integral term for the deviation in an integral term calculation unit 61i. The integral term calculation unit 61i calculates an integral term for a value, which takes into account not only the deviation but also a second correction torque $\Delta T2$ to be described below. The PID control unit 61 adds the calculated proportional term, integral term, and derivative term to calculate a first correction torque $\Delta T1$. The first correction torque $\Delta T1$ is calculated as a correction quantity for correcting a required torque Td for the vehicle 1 from the driver such that the rotation speed of each of the wheels 3 approaches the target wheel speed Vt.

(Initial Torque Reduction Control Unit)

The initial torque reduction control unit 62 calculates the second correction torque (torque reduction quantity) $\Delta T2$ to prevent slipping or locking of the wheels 3. Specifically, the initial torque reduction control unit 62 receives, as an input, a required acceleration for the vehicle 1 from the driver, and divides the input required acceleration by an equivalent inertia mass of the vehicle 1 and a wheel diameter of each of the wheels 3 to calculate a required acceleration Gwd for each of the wheels 3. The initial torque reduction control unit 62 receives, as an input, the actual wheel speed Vw of each of the wheels 3, and differentiates the input actual wheel speed Vw to calculate an actual acceleration Gw of each of the wheels 3.

The initial torque reduction control unit 62 calculates a deviation $\Delta Gw$ obtained by subtracting the calculated required acceleration Gwd from the actual acceleration Gw. Furthermore, the initial torque reduction control unit 62 multiplies the deviation $\Delta Gw$ by a predetermined torque conversion coefficient Kmv to calculate a third base value b3, and calculates a value multiplied by a second correction coefficient k2 to be described below, as the second correction torque $\Delta T2$. Therefore, unless the second correction coefficient k2 to be described below is taken into consideration, the second correction torque $\Delta T2$ is set to a larger absolute value as the actual acceleration increases relative to the required acceleration and the deviation $\Delta Gw$ becomes larger.

The Torque control unit 60 subtracts the second torque $\Delta T2$ from the first correction torque $\Delta T1$ calculated by the PID control unit 61, that is, the output value of the PID control, performs a predetermined phase lead compensation on the PID control in a phase lead control unit 63, and then calculates a final correction torque $\Delta T$. The torque control unit 60 adds the calculated final correction torque $\Delta T$ to the required torque Td from the driver to calculate the control torque for the wheels 3. Thus, the value of the final correction torque $\Delta T$ can be reduced. As a result, in a state where a driving-side torque is applied to the wheels 3 in a situation where the actual acceleration is greater than the required acceleration and thus the wheels 3 is highly likely to slip, the driving-side torque is reduced to a tendency to prevent the slipping and the slipping of the wheels 3 can be quickly prevented. In a situation where the actual acceleration is smaller than the required acceleration and thus the wheels 3 is highly likely to be locked in a state where a braking-side torque is applied to the wheels 3, the braking-side torque is reduced to a tendency to prevent the locking of the wheels 3 and thus the locking of the wheels 3 can be quickly prevented.

In the present embodiment, the second correction torque $\Delta T2$ calculated by the initial torque reduction control unit 62 is also used in the integral term calculation unit 61i of the PID control unit 61 as illustrated in the drawing. In the PID control unit 61, the integral term calculation unit 61i receives, as an input, a value obtained by adding the second correction torque $\Delta T2$ multiplied by a conversion coefficient (not illustrated) to the deviation between the target wheel sheep Vt and the actual wheel speed Vw, and calculates an integral term on such a value. Thereby, in the PID control unit 61, I-control is facilitated in proportion to the value based on the second correction torque $\Delta T2$. In other words, an I-control amount becomes large as the second correction torque $\Delta T2$ becomes large. As a result, a steady-state deviation of the PID control can be reduced, and control accuracy can be improved.

Furthermore, the integral term calculated by the integral term calculation unit 61i is output to the initial torque reduction control unit 62. The initial torque reduction control unit 62 sets a second correction coefficient k2 that is set according to the input integral term, that is, the I-control amount. Specifically, the initial torque reduction control unit 62 uses a map M4 in which the relationship between the I-control amount and the second correction coefficient k2 of the second correction torque $\Delta T2$ is predefined, and sets the second correction coefficient k2 according to the input I-control amount. The map M4 is predefined such that the second correction coefficient k2 becomes small as the I-control amount becomes large and the second correction coefficient k2 becomes zero when the I-control amount is equal to or greater than a predetermined value. As a result, the second correction torque ΔT2 calculated by multiplying the third base value b3 by the second correction coefficient k2 becomes small as the I-control amount becomes large, and becomes zero when the I-control is sufficiently facilitated. Thus, the contribution of the correction by the second correction torque ΔT2 is reduced as the output value of the PID control is settled, and after the slipping and locking of the wheels 3 are sufficiently prevented, the second correction torque ΔT2 is not reflected on the final correction torque ΔT, thereby stabilizing the value of the final correction torque ΔT.

(Effects of Embodiment)

As described above, the travel control device 50 of the embodiment is the travel control device 50 for the vehicle 1 including the front motor (electric motor for traveling) 4 and the rear motor (electric motor for traveling) 6 and configured to control the torque applied to each of the wheels 3 by the feedback control such that the front, rear, left, and right wheels 3 rotate based on the target slip ratio, the travel control device including the torque control unit 60 that calculates the second correction torque ΔT2 that tends to increase as the deviation ΔGw between the required acceleration Gwd for the wheels 3 and the actual acceleration Gw of the wheels 3 increases, and corrects the torque applied to each of the wheels 3 by subtracting the second correction torque (torque reduction quantity) ΔT2 from the output value of the feedback control (first correction torque ΔT1).

With such a configuration, it is possible to correct the output value of the feedback control based on the second correction torque ΔT2 such that the torque applied to each of the wheels 3 becomes smaller as the deviation ΔGw between the required acceleration Gwd and the actual acceleration Gw for each of the wheels 3. Thereby, even when there is an occurrence of slipping at which the rotation speed of the wheels 3 quickly increase or locking at which the wheels 3 do not rotate, the slipping or locking can be quickly prevented to bring the slip ratio S of the wheels 3 closer to the target slip ratio St. Therefore, it is possible to achieve the traction control with high accuracy and high response.

In addition, the feedback control is PID control, and the torque control unit 60 increases the I-control amount of the PID control as the second correction torque ΔT2 increases. With such a configuration, the steady-state deviation can be prevented, and the traction control can be performed with high accuracy.

In addition, the torque control unit 60 reduces a contribution of the correction by the second correction torque ΔT2 to the output value (first correction torque ΔT1) as the I-control amount becomes large. With such a configuration, as the I-control is facilitated and the output value of the PID control is settled, that is, as the rotation speed of the wheels 3 is settled, the contribution of the second correction torque ΔT2 can be reduced, and the value of the torque applied to each of the wheels 3 can be stabilized.

In addition, the travel control device further includes: the wheel translational speed calculation unit 57 that calculates the wheel translational speeds V (Vfl, Vfr, Vrl, and Vrr) in the traveling direction of the respective wheels 3 of the vehicle based on the steering angle δ, the vehicle speed Vs, the gravitational center slip angle β, and the vehicle specifications of the vehicle 1; and the target wheel speed calculation unit 58 that calculates the target wheel speeds Vt (Vtfl, Vtfr, Vtrl, and Vtrr) of the respective wheels 3 based on the wheel translational speed and the target slip ratio St, and the torque control unit 60 controls the torque by the feedback control such that the wheel speed approaches the target wheel speed Vt. With such a configuration, the target wheel speed Vt of each of the wheels 3 can be calculated with high accuracy using the wheel translational speed V with consideration given to the inner/outer wheel difference of each of the wheels 3, and the torque applied to each of the wheels 3 can be controlled with high accuracy. Therefore, the high accuracy of the traction control can be achieved, and the operation followability can be improved.

In addition, the wheel translational speed calculation unit 57 and the target wheel speed calculation unit 58 are included in the main control unit 20, and the torque control unit 60 is included in the motor control units (front motor control unit 10 and rear motor control unit 12, sub-control units) separate from the main control unit 20. With such a configuration, the motor control unit can calculate the control torque for each of the wheels 3 without information on the wheel translational speed V.

(Modifications)

Although the embodiment has been described above, the aspects of the present invention are not limited to the embodiment. For example, a case has been described in the embodiment in which the torque applied to each of the wheels 3 is controlled by feedback control at the target wheel speed Vt calculated by the target wheel speed calculation unit 58. However, the torque applied to each of the wheels 3 may be controlled by feedback control such that the slip ratio S of each of the wheels approaches the target slip ratio St.

The travel control device 50 of the present embodiment includes the front motor control unit 10 and the rear motor control unit 12 as motor control units, and the front brake control unit 31 and the rear brake control unit 32 as brake control units, but each of them may be provided for each motor or brake device, or one may be provided for each vehicle.

The vehicle 1 of the present embodiment is a plug-in hybrid vehicle (PHEV) equipped with the engine 2 and capable of external charging and external power supplying, but the present invention is also applicable to a hybrid vehicle (HEV) or an electric vehicle (EV). The present invention can also be applied to a vehicle in which driving or braking of each of four wheels can be electrically controlled independently.

**Explanation of Reference Signs**

| | |
|---|---|
| 1 | vehicle |
| 2 | engine |
| 3 | wheel |
| 4 | front motor (electric motor for driving) |
| 6 | rear motor (electric motor for driving) |
| 10 | front motor control unit (sub-control unit) |
| 12 | rear motor control unit (sub-control unit) |
| 20 | main control unit |
| 31 | front brake control unit (sub-control unit) |
| 32 | rear brake control unit (sub-control unit) |
| 50 | travel control device |
| 60 | torque control unit |
| 61 | PID control unit |
| 62 | initial torque reduction control unit |
| Gw | actual speed |
| Gwd | required acceleration |
| St | target slip ratio |
| V, Vfl, Vfr, Vrl, Vrr | wheel translational speed |
| Vs | vehicle speed |
| Vt, Vtfl, Vtfr, Vtrl, Vtrr | target wheel speed |
| $\beta$ | gravitational center slip angle |
| $\delta$ | steering angle (handle angle) |
| $\Delta Gw$ | deviation |
| $\Delta T2$ | second correction torque (torque reduction quantity) |

**Claims**

1. A travel control device for a vehicle including an electric motor for traveling and configured to control a torque applied to each of wheels by a feedback control such that front, rear, left, and right wheels rotate based on a target slip ratio, the travel control device comprising:
   a torque control unit that calculates a torque reduction quantity that tends to increase as a deviation between a required acceleration for the wheels and an actual acceleration of the wheels increases, and corrects the torque applied to each of the wheels by subtracting the torque reduction quantity from an output value of the feedback control.

2. The travel control device for a vehicle according to claim 1, wherein

   the feedback control is PID control, and
   the torque control unit increases an I-control amount of the PID control as the torque reduction quantity increases.

3. The travel control device for a vehicle according to claim 2, wherein
   the torque control unit reduces a contribution of correction by the torque reduction quantity toward the output value as the I-control amount increases.

4. The travel control device for a vehicle according to any one of claims 1 to 3, further comprising:

   a wheel translational speed calculation unit that calculates a wheel translational speed in a traveling direction of each of the wheels of the vehicle based on a steering angle, a vehicle speed, a gravitational center slip angle, and vehicle specifications; and
   a target wheel speed calculation unit that calculates a target wheel speed of each of the wheels based on the wheel translational speed and the target slip ratio, and
the torque control unit controls the torque by the feedback control such that a wheel speed approaches the target wheel speed.

5. The travel control device for a vehicle according to claim 4, wherein
the wheel translational speed calculation unit and the target wheel speed calculation unit are included in a main control unit, and the torque control unit is included in a sub-control unit separate from the main control unit.

# FIG. 1

FIG. 2

FIG. 3

# FIG. 4

# FIG. 5

# FIG. 6

## FIG. 7

# FIG. 8

FIG. 9

## INTERNATIONAL SEARCH REPORT

| International application No. |
| --- |
| **PCT/JP2023/047303** |

| A. | CLASSIFICATION OF SUBJECT MATTER |
| --- | --- |

*B60L 15/20*(2006.01)i; *B60K 6/442*(2007.10)i; *B60T 8/175*(2006.01)i; *B60W 10/02*(2006.01)i
FI: B60L15/20 Y ZHV; B60L15/20 J; B60T8/175; B60K6/442; B60W10/02 900

According to International Patent Classification (IPC) or to both national classification and IPC

| B. | FIELDS SEARCHED |
| --- | --- |

Minimum documentation searched (classification system followed by classification symbols)

B60L15/20; B60K6/442; B60T8/175; B60W10/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-163465 A (NISSAN MOTOR CO., LTD.) 05 September 2016 (2016-09-05) paragraphs [0023]-[0032], fig. 1-8B | 1-3 |
| A | | 4-5 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 February 2024** | **27 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/047303**

| Patent document cited in search report | | | Publication date (day/month/year) | Patent family member(s) | Publication date (day/month/year) |
|---|---|---|---|---|---|
| JP | 2016-163465 | A | 05 September 2016 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011254590 A